# EUROPEAN PATENT SPECIFICATION

(11) **EP 1 662 315 B1**
(45) Date of publication and mention of the grant of the patent: **10.12.2008**
(21) Application number: 05111122.7
(22) Date of filing: 23.11.2005
(51) Int. Cl.: G03B 27/73, G06T 5/40, G03B 27/80

(54) **Photograph image-processing method and device thereof**
Verfahren und Vorrichtung zur Lichtbildverarbeitung
Procédé de traitement d images photographiques et dispositif correspondant

(30) Priority: 24.11.2004 JP 2004338728
(43) Date of publication of application: 31.05.2006
(73) Proprietor: NORITSU KOKI CO., LTD., Wakayama City Wakayama, 640-8550 (JP)
(72) Inventor: Toshihiro, Shunsaku, Wakayama (JP)
(74) Representative: Betten & Resch

(56) References cited:
- US-A- 4 805 016
- US-A1- 2003 002 059
- US-A1- 2004 190 789
- US-A1- 2004 197 022
- ALPARSLAN E ET AL: "IMAGE ENHANCEMENT BY LOCAL HISTOGRAM STRETCHING" IEEE TRANSACTIONS ON SYSTEMS, MAN, AND CYBERNETICS, IEEE, NEW YORK, NY, US, vol. 5, May 1981 (1981-05), pages 376-385, XP009062452 ISSN: 0018-9472

## Description

### Background of the invention

### Field of the invention

The present invention relates to a photograph image-processing method and the device thereof, which adjusts color balance of R (red), G (green), and B (blue) (hereinafter called "RGB") so that natural color can be reproduced with respect to color image data obtained by reading photographic films, for example, negative films, etc.

### Description of the related art

In conventional photograph printers, as a photograph image-processing method to print images recorded on negative film onto photographic printing paper, photosensitive material, in good color shades, an LATD (Large Area Transmittance Density) exposure system based on the Evans' theory is known. This exposure system is a method to adjust each exposure rate of RGB in such a manner that the RGB integrated light that penetrates negative film is reproduced in gray when any deviation is observed in color, in accordance with the Evans' theory that when colors of the whole negative film are mixed, the color of an average outdoor photographic subject gets closer to gray. Specifically, the negative film is irradiated with light, the transmitted light is read by an image pickup device to create RGB color image data, the mean value of the color image data is calculated and derived for every RGB of each pixel, and in analog type photograph printers, a photochromic filter is adjusted to expose the photographic printing paper, and in digital type photograph printers, the exposure rates from relevant light sources of RGB are adjusted, respectively, so that each mean value of RGB achieves the specified value that corresponds to gray, respectively.

According to the conventional photograph image-processing method described above, there was a problem that the negative film is overcorrected due to color deviations of a photographic subject (person, background) and a photographic print all the more difficult to see is outputted. For example, in the case of a scene in which a person is photographed against a background of the grass, the area of the grass is finished in gray, while in the area of the person, magenta which is a complementary color of the grass strongly appears. This kind of condition is called color failure, and as the measures, a method for removing the high chromatic pixel in the LATD exposure method or a method to find conditional mean values weighted by chroma, and others are proposed in Japanese Unexamined Patent Publication No. 2000-330221.

However, according to the above-mentioned method, in the case of a scene with large color deviation, the number of pixels used for calculation becomes extremely small, resulting in a tendency of short stability, and even with small weighting, if the number of pixels that correspond to this is large, the print results are not a little affected. Furthermore, since the threshold values to remove the high chroma pixels or weighting conditions by chroma were determined empirically, they were not always infallible and there was a room for further improvement.

Another example of conventional image-processing method is disclosed in US-A-2003/0002059.

### Summary of the invention

In view of conventional defects, it is an object of the present invention to provide a photograph image-processing method and the device thereof, which can correct colors reducing the affection by color failure and without using the LATD exposure method which requires consideration to threshold values for high chroma pixel removal or weighting conditions by an empirical rule.

In order to achieve the above-mentioned object, the photograph image-processing method according to the present invention includes the steps defined in independent claim 1.

It is preferable in said method that a color data conversion process finds the base concentration position of each color component in the original concentration histogram based on the shift rate and the stretch ratio, calculates the concentration at the position as the base concentration value of each color composition of film, and converts color components of each pixel of the color image data on the basis of the obtained base concentration value and the stretch ratio, with the position that indicates the minimum value in the minimum concentration value of each concentration histogram in the shift rate and the stretch ratio found in the discriminating process used as the base concentration position.

A photograph image-processing device according to the present invention is defined in independent claim 5 .

It is preferable that the color data conversion unit in said device finds the base concentration position of each color component in the original concentration histogram based on the shift rate and the stretch ratio, calculates the concentration at the position as the base concentration value of each color composition of film, and converts color components of each pixel of the color image data on the basis of the obtained base concentration value and the stretch ratio, with the position that indicates the minimum value in the minimum concentration value of each concentration histogram in the shift rate and the stretch ratio found in the discriminating unit used as the base concentration position.

According to the present invention, it becomes possible to provide a photograph image-processing method and the device thereof, which can correct colors reducing the affection by color failure and without using the LATD exposure method which requires consideration to threshold values for high chroma pixel removal or weighting conditions by an empirical rule.

Furthermore, other inventions will be more fully apparent by referring to the following embodiments.

### Brief description of the drawings

Fig. 1 is a functional block diagram of a photograph image processing device according to the present invention;
Fig. 2 is a functional block diagram of a photograph image processing unit;
Fig. 3 is a flow chart that explains photograph image processing;
Fig. 4A is a concentration histogram, which indicates each of RGB concentration histograms, respectively, generated on the basis of image data read from film;
Fig. 4B is a concentration histogram, which indicates each of RGB concentration histograms, respectively, after shift-processing and stretch-processing;
Fig. 5A is a concentration histogram, which indicates each of RG concentration histograms generated on the basis of image data read from film;
Fig. 5B is a concentration histogram, indicating each of RG concentration histograms, respectively, to explain shift processing;
Fig. 5C is a concentration histogram, indicating each of RG concentration histograms, respectively, to explain stretch processing;
Fig. 6A is a concentration histogram, which indicates each of GB concentration histograms generated on the basis of image data read from film;
Fig. 6B is a concentration histogram, indicating each of GB concentration histograms, respectively, to explain shift processing;
Fig. 6C is a concentration histogram, indicating each of GB concentration histograms, respectively, to explain stretch processing;
Fig. 7A is a concentration histogram, which is a histogram of each of RB concentrations generated on the basis of image data read from a film;
Fig. 7B is a concentration histogram, which is a histogram of each of RB concentrations after shift-processing and stretch-processing of Fig. 5B and Fig. 5C as well as Fig. 6B and Fig. 6C;
Fig. 8A is a concentration histogram when there is deviation in any one of the colors, and is a histogram of each of RGB concentrations generated on the basis of the image data read from film;
Fig. 8B is a concentration histogram when there is deviation in any one of the colors, and is a histogram of each of RGB concentrations after shift processing and stretch processing;
Fig. 9A is a concentration histogram when there is deviation in any one of the colors, and is a histogram of each of GB concentrations generated on the basis of the image data read from film;
Fig. 9B is a concentration histogram when there is deviation in any one of the colors, and is a histogram of each of GB concentrations which explain shift processing; and
Fig. 9C is a concentration histogram when there is deviation in any one of the colors and is a histogram of each of GB concentrations after stretch processing.

### Description of the preferred embodiments

Referring now to the drawings, a photograph image-processing method and a device using the method will be described in detail hereinafter.

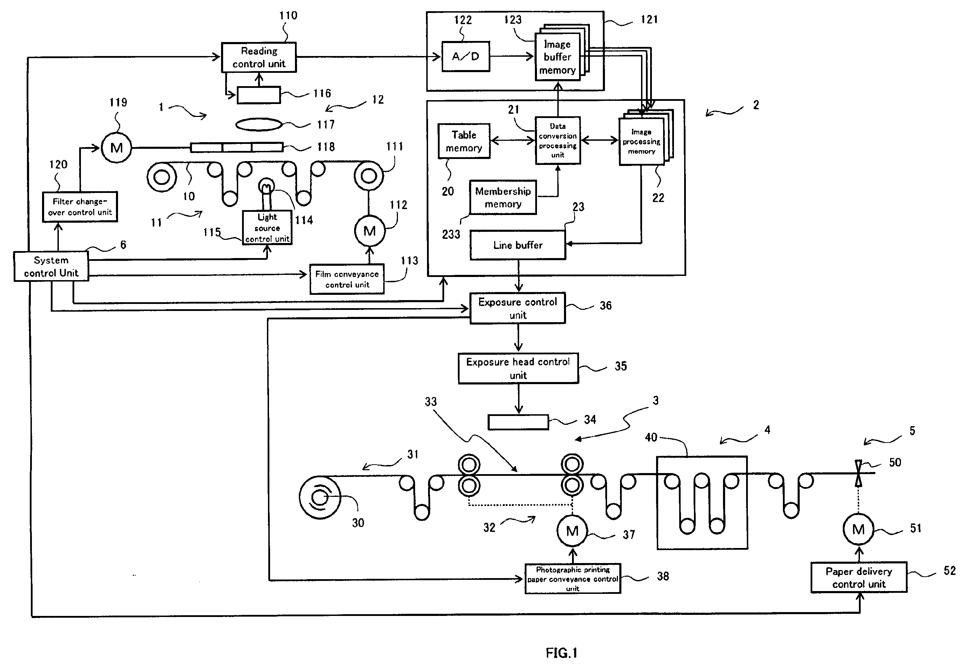

A device based on the photo image-processing method according to the present invention, as shown in Fig. 1, includes a film image entering unit 1 that reads an image from film and stores in memory, an image data processing unit 2 that provides specified data processing, etc. for the color image data entered from the film image entering unit 1, an image exposing unit 3 that is equipped with an exposure head to expose photographic printing paper in accordance with the processed image data, a developing processing unit 4 that develops the exposed photographic printing paper, a paper delivery unit 5 that cuts the developed photographic printing paper in units of frames, and a system control unit 6 that integrates the whole of functional blocks described above and controls operation.

The film image entering unit 1 includes a film conveying unit 11 that intermittently conveys each frame of developed 135 color negative film 10, for example, and an image reading unit 12 that reads an image of each frame of film 10, and the film conveying unit 11 includes a winding roller 111, film conveying motor 112 that drives to rotate the winding roller 111, and a film conveyance control unit 113 that controls the film conveying motor 112, the image reading unit 12 includes a light source 114 located below the film 10, a light source control unit 115 that controls light-emitting intensity of the light source 114, an image pickup device 116 equipped with two-dimensional CCD, a reading control unit 110 that controls reading of an image by the image pickup device 116, lens 117 that forms each frame image of film 10 on a light-receiving surface of the image pickup device 116, a optical filter 118 that is installed between the film 10 and the lens 117 and separates the image of film 10 into three colors of RGB, a filter driving motor 119 that changes over and drives the optical filter 118, a filter change-over control unit 120 that drives and controls the filter driving motor 119, and an image data storage memory 121 that stores the image signal read by the image pickup device 116 as digital data. The image data storage unit 121 includes an A/D converter 122 that converts relevant analog image signals of RGB read by the image pickup device 116 into RGB digital image data in a 16-bit gradation level, respectively, and image buffer memory 123 that includes RAM which stores RGB three-color digital image data converted by the A/D converter 122 in units of frames, and others.

The image data processing unit 2 includes table memory 20 that stored table data, etc. used when various correction processing such as color correction and gradation correction, etc. later discussed and the specified processing such as layout processing, etc. are executed for the image data stored in the image buffer memory 123, image data conversion processing unit 21 equipped with an image processing CPU that reads the image data stored in the image buffer memory 123 and executes color correction processing, gradation correction processing, data conversion processing such as magnification conversion processing, etc., image processing memory 22 in which the image data used and converted for conversion processing of image data by the image data conversion processing unit 21 is stored in an area divided according to RGB colors as final image as final image data in the units of frames, line buffer memory 23 that temporarily stores image data of one line of the final image data, and others.

The image exposing unit 3 includes a photographic conveyance unit 32 provided with a photographic printing paper conveyance control unit 38 that conveys a long sheet form photographic printing paper 31 wrapped around a roll cassette 30 towards an exposure station 33 by a conveying motor 37, an exposure head 34 of a PLZT system that exposes and scans the photographic printing paper 31 conveyed to the exposure station 33, an exposure head control unit 35 that drives and controls the exposure head 34, and an exposure control unit 36 that outputs image data from the line buffer memory 23 to the exposure head control unit 35 at a specified timing synchronized with the conveying speed of the photographic printing paper 31.

The developing processing unit 4 includes a processing tank 40 filled with developing processing liquid, such as developing solution, etc., and a conveyance control unit that conveys the exposed roll photographic printing paper 31 to the processing tank 40 and conveys the roll photographic printing paper 31 that has undergone each processing of developing, bleaching, and fixing to the paper delivery unit 5, and the paper delivery unit 5 includes a cutter 50 that cuts the roll photographic printing paper 31 which underwent developing processing at the developing processing unit 4 in the width direction and divides in the units of one frame and a paper delivery control unit 52 that drives and controls a cutting motor 51 that drives the cutter 50 and discharges and controls the cut photographic printing paper 31 to the outside of the device.

The system control unit 6 includes control CPU, ROM in which the control program is stored, RAM for data processing, and control signal I/O circuit for each functional blocks, and each functional block is integrated and controlled by the control program.

The system control unit 6 carries out read control by changing over between two modes: the pre-scan mode in which the film image entering unit 1 is activated to read images of one roll of film including a transparent section at low resolution and at high speed and the full-scale scan mode in which the film image entering unit 1 is activated to read frame images only of the film recognized in the pre-scan mode at high resolution, and at the same time, activates the image data processing unit 2 to carry out pre-judge processing to calculate and derive correction data for color correction, gradation correction, etc. for the images of low resolution read in the pre-scan mode, and allows color correction and gradation correction to take place on the high-resolution images read in the full-scale scan mode on the basis of the relevant correction data.

Thereafter, the system control unit 6 activates the photographic printing paper conveyance control unit 38 to convey photographic printing paper 31 to the exposure station 33, and activates the exposure control unit 36 to drive and control the exposure head 34 in accordance with the corrected print data which is processed by the image data processing unit 2.

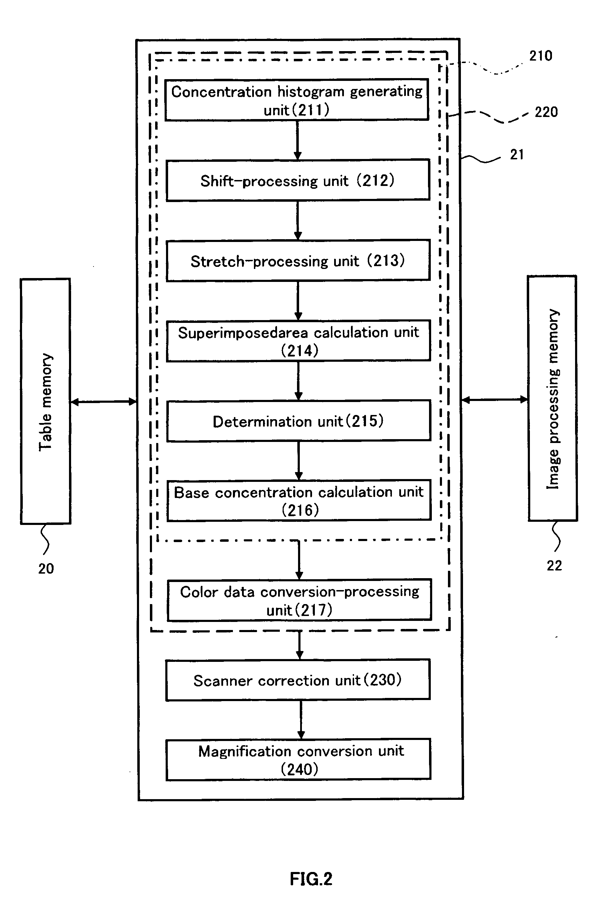

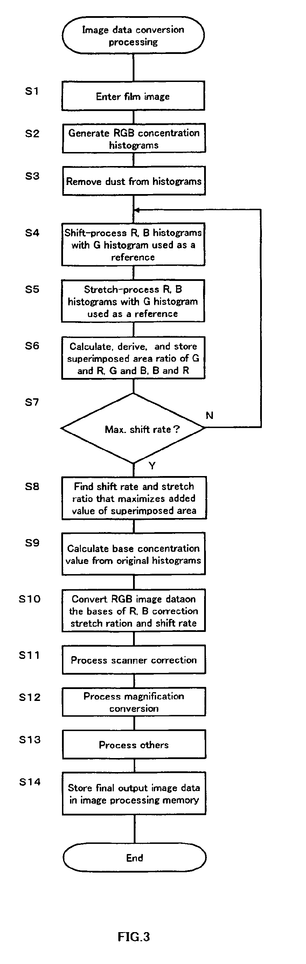

Referring now to Fig. 2, the configuration of main functional blocks of the image data conversion processing unit 21 will be described and at the same time, the processing content will be described in accordance with the flow chart shown in Fig. 3. As shown in Fig. 2, the image data conversion processing unit 21 includes a color correction processing unit 220, a scanner correction unit 230 that carried out gradation correction, a magnification conversion unit 240 that adjusts the film image to the output size, and others.

The color correction unit 220 includes a base concentration detection unit 210 which finds the base concentration of film from the low-resolution color image data read in the pre-scan mode and a color data conversion processing unit 217 which finds out the correction data for color balance adjustment with the film base concentration detected from the base concentration detection unit 210 used as reference and at the same time corrects the high-resolution color image data read in the full-scale scan mode in accordance with the correction data.

The base concentration detection unit 210 includes a concentration histogram generating unit 211 that generates concentration histograms for each of RGB color components from color image data of the subject film stored in the image data storage unit 121 (Fig. 1), shift processing unit 212 that shifts concentration histograms of other colors in the concentration axial direction, respectively, with the concentration histograms of specific colors used as a reference, stretch processing unit 213 that stretches the concentration histograms of other colors in the concentration axial direction with the minimum concentration value used as reference after shift-processing, superimposed area calculation unit 214 that calculates and derives, respectively, superimposed areas of concentration histograms by combinations of two color components after stretch processing, determination unit 215 that finds the amount of shift and stretch ratio which maximize the total amount of respective superimposed areas calculated and derived, and base concentration calculation unit 216 which finds the base concentration position for each color component in the original concentration histogram based on the amount of shift and stretch ratio with the position that indicates the minimum value in the minimum concentrations of each concentration histogram at the amount of shift and stretch ratio found at the determination unit 215 used as the base concentration position, and which calculates and derives the concentration at the position as the film base concentration value.

The film varies in characteristics in accordance with manufacturers and sensitivities, but in general, there is a certain correlation between RGB color components of color image data, and in particular, the photographed object which contains more achromatic colors provides higher RGB correlation. Consequently, by observing the conformity of concentration histograms of each of RGB color components, the color of achromatic color object, that is, the color manifested by the film characteristics can be detected.

Therefore, it may be contrived to find out the color balance of the achromatic color object photographed on the film by stretching each of the concentration histograms in the concentration axial direction to have a relative stretch ratio in such a manner as to maximize the superimposed area of each of RGB histograms with respect to the concentration histogram of each of RGB color components generated from the color image data entered in the film image entering process, but if there is any color deviation in objects in images, deviation is generated in peacks of histograms of specific colors and as a result of aligning the peacks of other histograms which should not essentially be aligned, there is a fear in that proper color balance may not be obtained even by correcting colors at the relative stretch ratio which maximizes the superimposed area.

In view of this kind of point, in the present invention, with a specific color concentration histogram used as reference, other color concentration histogram is stretched in the concentration axial direction, and the superimposed area of any two color concentration histograms are calculated and derived, respectively, and a stretch ratio that maximizes either the total of the superimposed areas or each of the respective superimposed areas is found; as a result, it has become possible to consider the superimposed area of histograms free of deviation by conversion-processing corresponding color components of each pixel of the color image data in accordance with the stretch ratio, and it has become possible to correct color in such a manner as to achieve proper color balance while suppressing influences of color failure. By digitally exposing the photographic printing paper in accordance with the new color image data obtained in this way, steadily proper digital photograph prints can be obtained.

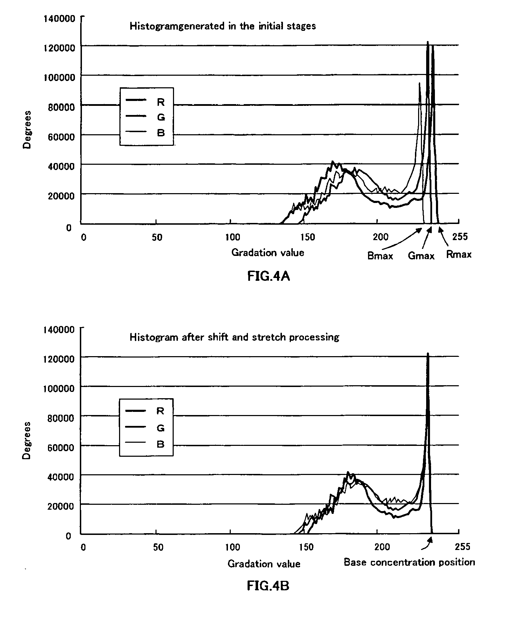

As shown in Fig. 3, when the color image data that contains film image equivalent to one roll of 135 color negative film read by the film image entering unit 1 in the pre-scan mode is stored in image buffer memory 123 (S1), concentration histograms of each of RGB color components to the color image data are generated in the table memory 20 area by the concentration histogram generation unit 211 (S2). The concentration histogram is expressed in the two-dimensional coordinate system with the concentration values expressed in 256 stages from 0 (dense) to 255 (thin) as abscissa and the degrees (number of pixels) to the concentration value as ordinate, as shown in Fig. 4A, and the concentration distribution of each of RGB color components of film image equivalent to one roll of 135 color negative film containing a transparent section film can be grasped. By the way, the resolution of abscissa of the concentration histograms shall not be particularly limited and may be suitably set.

Of the degrees that correspond to gradation values of generated concentration histograms, the degrees less than 0.1% of the total number of pixels read are set to 0 in order to eliminate them as noise components (S3). For the relevant concentration RGB histograms with the noise components removed in this way, concentration histograms of other colors are shifted in the concentration axial direction with the concentration histograms of specific colors used as references in such a manner that the conformity of concentration histograms of each color component can be maximized by the shift processing unit 212, and thereafter, concentration histograms of other colors are stretched in the concentration axial direction with the minimum concentration value used as the reference by the stretch processing unit 213.

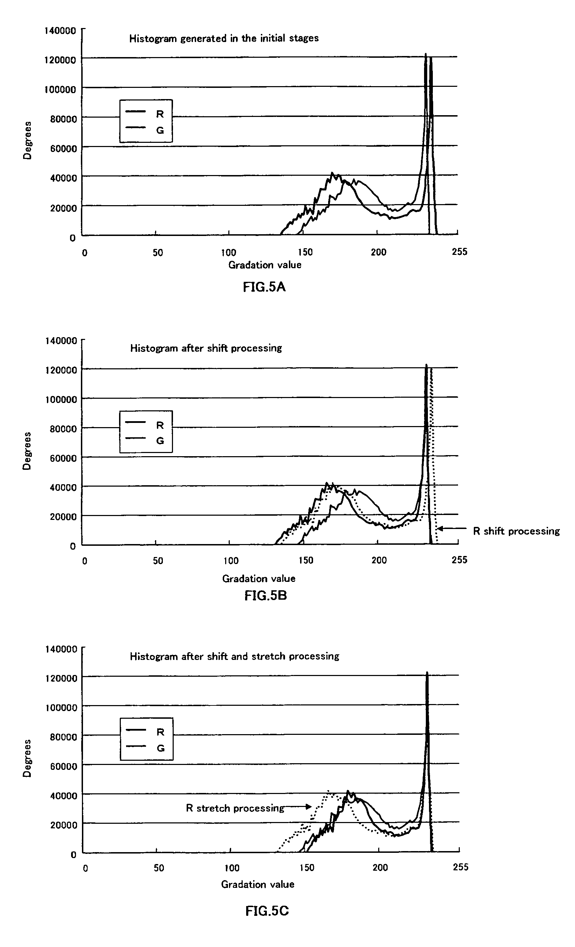

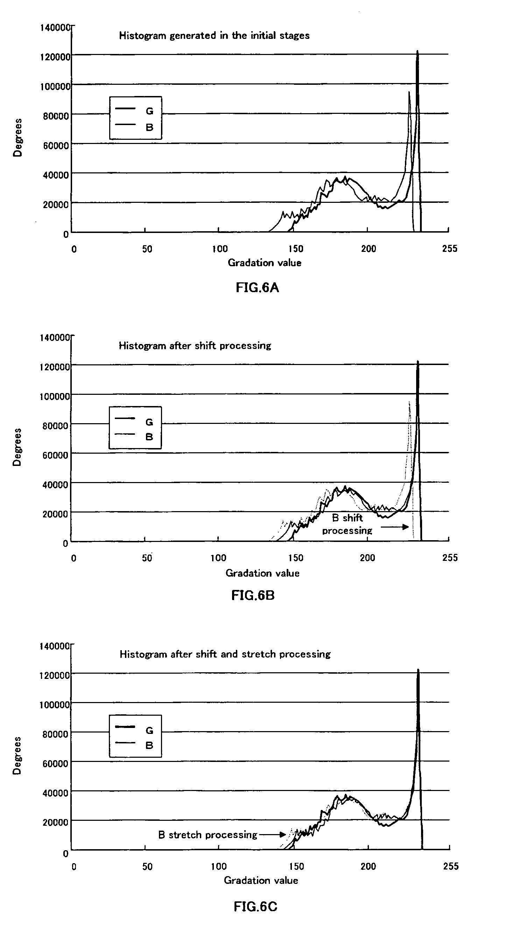

Specifically, the shift processing unit 212 shifts the R component concentration histogram (shown with broken line) initially generated with the G component concentration histogram used as a reference as shown in Fig. 5B in the concentration axial direction, in this case, in the gradation axial direction by the specified volume only (shown with solid line) with respect to the G component and R component concentration histograms shown in Fig. 6A. And at the same time, the B component concentration histogram (shown in broken line) initially generated with the G component concentration used as a reference in the concentration axial direction as shown in Fig. 6B, in this case, in the gradation axial direction by the specified volume only (shown in solid line) with respect to the concentration histograms of G component and B component shown in Fig. 6B (S4).

Because by providing a shift process, it becomes possible to increase the opportunity to obtain a proper stretch ratio by carrying out stretch processing after histograms are shifted in the concentration axial direction and improve the conformity of concentration histograms of each of RGB color components, it becomes possible to correct color in such a manner as to obtain still more proper color balance.

In shift processing, with the deviation of the minimum concentration value of each histogram to the minimum value in the minimum concentration values of concentration histograms of each of color components designated as the maximum shift volume, histograms are shifted to the minimum value. That is, in the case shown in Fig. 4A, histograms are shifted to the minimum value (maximum Rmax of gradations) with the deviations | Rmax - Gmax | , | Rmax - Bmax | with other concentration histograms designated as the maximum shift volume with respect to the minimum value (maximum Rmax of gradations) in the minimum concentration values (maximum gradation values Rmax, Gmax, Bmax) of each concentration histogram of RGB.

For example, when the R component concentration histogram is shifted with the G component concentration histogram used as a reference, the histogram is shifted only by the initial value preset with the maximum value Rmax of R gradation set as a reference (-10 scale (this value is not particularly restricted but is properly set)), and thereafter, the histogram is shifted in the direction where the gradation is increased in increments of 1 scale to the scale that corresponds to the maximum shift volume (| Rmax - Gmax |). In the similar manner, when the B component concentration histogram is shift-processed, the histogram is shifted only by the initial value (-10 scale) preset with the maximum value Bmax of B component gradation used as a reference, and thereafter, the histogram is shifted in the direction where the gradation is increased in increments of 1 scale to the scale that corresponds to the maximum shift volume (| Rmax - Bmax|).

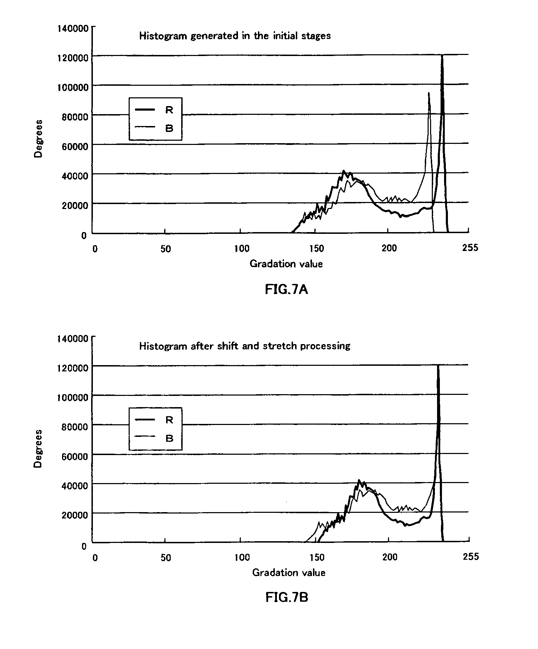

After shift-processing, the stretch processing unit 213 carries out stretch processing stepwise so that the position that indicates the minimum gradation value of R component concentration histogram and B component concentration histogram, respectively, that is, the left end of the R component concentration histogram of Fig. 5B and the left end of the B component concentration histogram of Fig. 6B are located at each scale in the range of ±15 scale from the relevant positions (this value is not particularly restricted, either, and may be properly set) (S5). One example of concentration histograms of each component is shown in Fig. 5C, Fig. 6C, and Fig. 7B. By the way, Fig. 7A shows concentration histograms of R component and B component initially generated.

The superimposed area calculation unit 214 calculates and derives the superimposed area of respective concentration histograms by combinations of two color components after processing of Steps S4 and S5 described above, that is, the area of superimposed portion of G and R, G and B, B and R concentration histograms (S6).

The processing from step S4 to step S6 is repeated and the determination unit 215 repeats processing to find out the G and R, G and B, B and R superimposed area of concentration histograms every time processing from step S4 to step S6 is repeated (S7), and finds the shift rate and the stretch ratio that maximizes the relevant superimposed area (S8). Fig. 4B shows histograms of each color component after shift processing and stretch processing when the superimposed area is maximized. The base concentration calculation unit 216 recognizes the maximum value (minimum value) of the maximum gradation (minimum concentration) of each histogram in such event, and calculates back to find the base concentration position for each of the color components in the original concentration histograms shown in Fig. 4A in accordance with the relevant shift rate and stretch ratio, and calculates and derives the concentration at the position as the film base concentration value (S9).

The color data conversion processing unit 217 stores the shift rate and stretch ratio found at the discriminating unit 215 with the determined base concentration of the relevant film used as reference as correction data for color balance adjustment and correction-processes the high-resolution color image data read by the full-scale scan mode (S10). That is, the color data conversion processing unit 217 conversion-processes the RGB components of each of relevant pixels of high-resolution frame image data stored in the image buffer memory 123 at the time of full-scale scan. For example, in the event that the shift rate of R component is found as Sr and the stretch ratio as Mr as the correction data, the color data conversion processing unit 217 shifts the R component of high-resolution frame image data by Sr and then, multiplies by Mr to calculate and derive new R component pixel data.

The histogram shown in Fig. 4A is a case in which respective concentration histograms of RGB have similar patterns, but the same principle applies to a case in which respective concentration histograms of RGB have different patterns as is the case of photos taken on grass and photos taken on the beach.

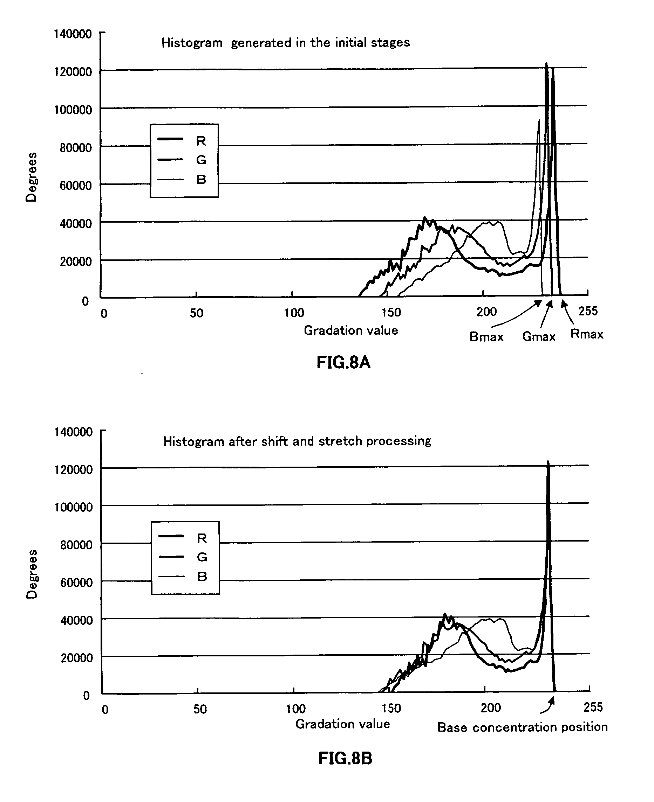

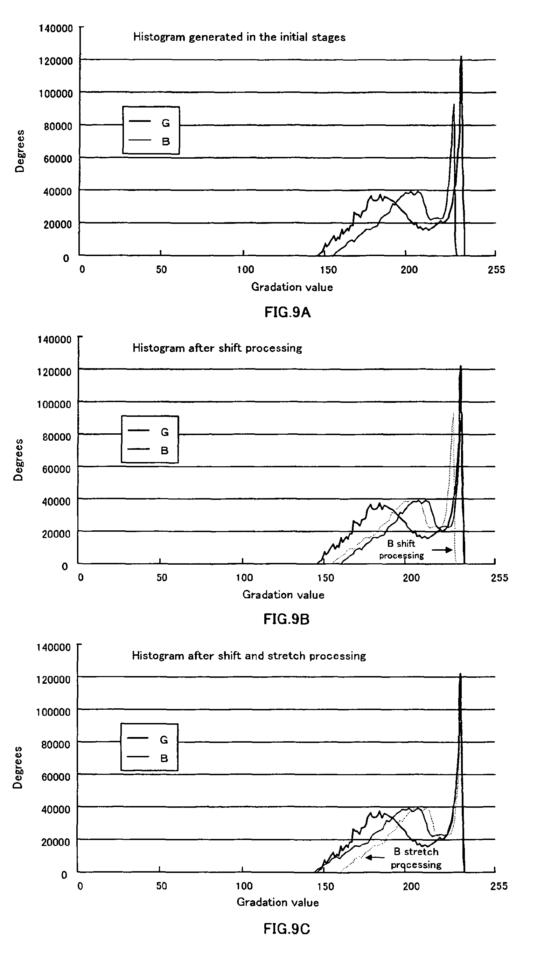

For example, as shown in Fig. 8A, even when the component B indicates a pattern different from concentration histograms of component R and component G, shift processing and stretch processing are carried out as shown in Fig. 9B and Fig. 9C on histograms of each of GB components shown in Fig. 9A, and correction can be made to obtain appropriate color balance by finding histograms in which the sum of areas of superimposed portions of respective concentration histograms of G and R, G and B, and B and R shown in Fig. 8B are maximized.

That is, according to the present invention, as a result of calculating and deriving superimposed areas of concentration histograms of either two colors and finding a stretch ratio that maximizes a total value of their superimposed areas, it is possible to consider the superimposed area of histograms free of deviation as compared to the cases in which color-correction is made in accordance with the stretch ratio obtained by stretching each concentration histogram in the concentration axial direction in such a manner that the superimposed area of histograms of RGB is maximized by conversion-processing corresponding color components of each pixel of the color image data in accordance with the stretch ratio, and therefore, it becomes possible to correct color in such a manner to obtain appropriate color balance while suppressing influence of color failure.

This concludes color correction processing and scanner correction processing (S11), magnification conversion processing (S12), and other necessary processing (S13) are successively executed, and the final output image data is stored in image processing memory 22 (S14).

That is, as shown in the flow chart of Fig. 3, the photograph image-processing method according to the present invention includes a film image entering process for reading a film image by an image pickup device and generating color image data, a concentration histogram generating process for generating concentration histograms for each of RGB color components from the color image data, a shift processing process for shifting concentration histograms of other colors in the concentration axial direction, respectively, with a concentration histogram of a specific color used as a reference, a stretch-processing process for stretching the concentration histograms of other colors in the concentration axial direction with the minimum concentration value used as a reference after shift processing, a superimposed area calculating process for calculating and deriving superimposed area of the concentration histogram, respectively, by combinations of two color components after stretch-processing. a discriminating process for finding a shift rate and stretch ratio which maximizes either the total of respective superimposed areas calculated and derived or respective superimposed areas, and a color data conversion process for conversion-processing color components of each pixel of the color image data in accordance with the shift rate and stretch ratio found in the discriminating process.

Furthermore, the color data conversion process finds the base concentration position of each color component in the original concentration histogram based on the shift rate and the stretch ratio, calculates the concentration at the position as the base concentration value of each color composition of film, and converts color components of each pixel of the color image data on the basis of the obtained base concentration value and the stretch ratio, with the position that indicates the minimum value in the minimum concentration value of each concentration histogram in the shift rate and the stretch ratio found in the discriminating process used as the base concentration position.

Now, the method for deriving the film base concentration value is not limited to the method described above but may be a method to find the film base concentration value by calculating and deriving with the concentration of an unexposed section, for example, a transparent section between image frames used as the base concentration from the all image data of the film read in the pre-scan mode, and in such event, the film base concentration is found before Step S4 described above and at the same time, in shift processing in Step S4, shifting is carried out in such a manner as to superimpose respective base concentration positions of RGB, and thereafter, the G concentration histogram is used to serve as reference, and R and B concentration histograms are stretched with the base concentration position used as reference.

In the above-mentioned embodiment, description is made on an example to find the shift rate and the stretch ratio of R, B components with the G component used as a reference, but this may be configured to find the shift rate and the stretch ratio with the R component or B component used as a reference.

In the above-mentioned embodiment, a case in which the shift rate and stretch ratio that maximize the sum of the respective superimposed areas calculated and derived in the discriminating process, respectively, is discussed, but it is possible to configure the process to find the stretch ratio that maximizes either one of the superimposed areas.

In the above-mentioned embodiment, description is made on the case in which the concentration histograms are generated in accordance with the total image data for one roll of film images at the time of pre-scan, but as is the case of additional printing processing, etc., concentration histograms may be created in accordance with one piece of negative film or a plurality of negative pieces connected by splicing. However, for the present invention, it is preferable to create concentration histograms in accordance with the total image data for one roll of film images.

In the above-mentioned embodiment, discussion is made on the case in which the base concentration detection unit 210 detects the base concentration with respect to the low-resolution color image data containing a transparent section read by the film image entering unit 1 in the pre-scan mode, but needless to say, it is possible to detect, in the same manner, the base concentration for the high-resolution color image data containing frame images alone read by the film image entering unit 1 in the full-scale scan mode.

The photograph image-processing method and the device thereof according to the present invention are particularly suited for digital exposure system photograph processing devices, and in the above-mentioned embodiment, the case with the PLZT system exposure head adopted is described, but the exposure head may be applied to various digital exposure heads of laser system, FOCRT system, and others.

Furthermore, the photograph image-processing method and the device thereof according to the present invention are applicable to analog exposure system photograph processing devices, and in such event, the devices should be configured to equip the light source, a mirror tunnel that uniformly adjusts a bundle of rays from the light source and RGB photochromic filter, in place of the digital exposure unit, and an analog exposure unit which projects and exposes the film fixed to negative mask onto photographic printing paper, and should adjust the photochromic filter in accordance with the relative stretch ratio and expose the photographic printing paper to the light.

It is possible to steadily obtain appropriate analog photograph prints by adjusting the photochromic filter in accordance with the stretch ratio obtained by considering the superimposed areas of histograms free of deviation as described above and exposing the data on the photographic printing paper.

The present invention should not be limited to the above-mentioned embodiments but changes and variations may be made properly within the purview of characteristic configurations set forth in the column of "Problems that this invention is to solve" and their combinations as far as the similar working effects are obtained.

In summary an embodiment of the invention can be described as follows:

From color image data read by an image pickup device, concentration histograms are generated for each of RGB color components, and with the specific color concentration histogram used as reference, other color concentration histograms are shifted in the concentration axial direction, respectively; then, other color concentration histograms are stretched in the concentration axial direction with the minimum concentration value used as reference, superimposed areas of concentration histograms by combinations of two color components after stretch-processing are calculated and derived, respectively, and based on the shift rate and stretch ratio which maximize the total of superimposed areas obtained respectively, each color component of each pixel of the color image data is converted.

## Claims

1. A photograph image-processing method, comprising:
a film image entering step for acquiring a film image by reading a film image by an image pickup device and generating color image data; **characterized**
**in that** it furthermore comprises:
a concentration histogram generating step for generating concentration histograms for each of RGB color components from the color image data;
a shift processing step for shifting each of the concentration histograms of other colors in the concentration axial direction, respectively, to a concentration histogram of one of the generated concentration histograms used as a reference;
a stretch-processing step for stretching the concentration histograms of the other colors in the concentration axial direction with the minimum concentration value used as a reference after shift processing;
a superimposed area calculating step for calculating and deriving superimposed area of the concentration histogram, respectively, by any combination of two of RGB color components after stretch-processing;
a discriminating step for finding a shift rate and stretch ratio which maximize either the total of respective superimposed areas or respective superimposed areas; and
a color data conversion step for conversion-processing color components of each pixel of the color image data in accordance with the shift rate and stretch ratio found in the discriminating step.

2. The photograph image-processing method according to claim 1,
**characterized in that**
the color data conversion step comprises the steps of:
calculating the concentration at the position of the original concentration histograms for each of RGB color components corresponding to the position that indicates the minimum value in the minimum concentration value of each concentration histogram in the shift rate and the stretch ratio found in the discriminating step as the base concentration value of each color composition of film, and
converting color components of each pixel of the color image data on the basis of the obtained base concentration value and the stretch ratio.

3. The photograph image-processing method according to claim 1, **characterized in that**
the color data conversion step comprises the step of:
adjusting a photochromic filter in accordance with the shift rate and the stretch ratio found in the discriminating process and exposing to photographic printing paper.

4. The photograph image-processing method according to any one of claims 1 through 3, **characterized in that**
the concentration histogram is generated on the basis of the total image data against film images worth of one roll.

5. A photograph image-processing device, comprising:
a film image entering unit (1) for acquiring a film image by reading a film image by an image pickup device and generating color image data; **characterized in that** it furthermore comprises:
a concentration histogram generating unit (211) for generating concentration histograms for each of RGB color components from the color image data;
a shift processing unit (212) for shifting each of the concentration histograms of other colors in the concentration axial direction, respectively, to a concentration histogram of one of the generated concentration histograms used as a reference;
a stretch-processing unit (213) for stretching the concentration histograms of the other colors in the concentration axial direction with the minimum concentration value used as a reference after shift processing;
a superimposed area calculating unit (214) for calculating and deriving superimposed area, respectively, by any combination of two of RGB color components after stretch-processing;
a discriminating unit (215) for finding a shift rate and stretch ratio which maximize either the total of respective superimposed areas or respective superimposed areas; and
a color data conversion-processing unit for conversion-processing color components of each pixel of the color image data in accordance with the shift rate and stretch ratio found in the discriminating unit.

6. The photograph image-processing device according to claim 5, **characterized in that**
the color data conversion unit calculates the concentration at the position of the original concentration histograms for each of RGB color components corresponding to the position that indicates the minimum value in the minimum concentration value of each concentration histogram in the shift rate and the stretch ratio found in the discriminating unit as the base concentration value of each color composition of film, and converts color components of each pixel of the color image data on the basis of the obtained base concentration value and the stretch ratio.

7. The photograph image-processing device according to claim 5, **characterized in that**
the color conversion unit comprises an exposing unit for adjusting a photochromic filter in accordance with the shift rate and the stretch ratio found in the discriminating process and exposing to photographic printing paper.

8. The photograph image-processing device according to any of claims 5 through 7, **characterized in that**
the concentration histogram is generated on the basis of the total image data against film images worth of one roll.

## Patentansprüche

1. Fotographie-Bildverarbeitungsverfahren, umfassend:
einen Filmbildeinzugsschritt zum Erlangen eines Filmbildes durch Lesen eines Filmbildes durch ein Bildaufnahmegerät und Generieren von Farbbilddaten; **dadurch gekennzeichnet, dass** es weiterhin umfasst:
einen Konzentrationshistogramm-Generierungsschritt zum Generieren von Konzentrationshistogrammen für jede der RGB-Farbkomponenten aus den Farbbilddaten;
einen Verschiebungsverarbeitungsschritt zum jeweiligen Verschieben von jedem der Konzentrationshistogramme von anderen Farben in der Konzentrationsachsenrichtung zu einem Konzentrationshistogramm von einem der generierten Konzentrationshistogramme, das als eine Referenz verwendet wird;
einen Dehnungsverarbeitungsschritt zum Dehnen der Konzentrationshistogramme von den anderen Farben in der Konzentrationsachsenrichtung mit dem minimalen Konzentrationswert, der nach der Verschiebungsverarbeitung als eine Referenz verwendet wird;
einen Überlagerungsbereich-Berechnungsschritt zum Berechnen bzw. Ableiten eines Überlagerungsbereiches des Konzentrationshistogramms durch jede Kombination von zwei der RGB-Farbkomponenten nach der Dehnungsverarbeitung;
einen Unterscheidungsschritt zum Auffinden einer Verschiebungsrate und eines Dehnungsverhältnisses, die entweder die Gesamtzahl jeweiliger Überlagerungsbereiche oder die jeweiligen Überlagerungsbereiche maximiert; und
einen Farbdaten-Konversionsschritt zur Konversionsverarbeitung von Farbkomponenten von jedem Pixel der Farbbilddaten in Übereinstimmung mit der Verschiebungsrate und dem Dehnungsverhältnis, die in dem Unterscheidungsschritt gefunden wurden.

2. Fotographie-Bildverarbeitungsverfahren nach Anspruch 1, **dadurch gekennzeichnet, dass**
der Farbdaten-Konversionsschritt die Schritte umfasst:
Berechnen der Konzentration an der Position der Original-Konzentrationshistogramme für jede der RGB-Farbkomponenten entsprechend der Position, die den minimalen Wert der minimalen Konzentrationswerte für jedes Konzentrationshistogramm in der Verschiebungsrate und dem Dehnungsverhältnis kennzeichnet, die in dem Unterscheidungsschritt als der Basiskonzentrationswert für jede Farbzusammensetzung des Filmes gefunden wurden, und
Konvertieren von Farbkomponenten von jedem Pixel der Farbbilddaten basierend auf dem erhaltenen Basiskonzentrationswert und dem Dehnungsverhältnis.

3. Fotographie-Bildverarbeitungsverfahren nach Anspruch 1, **dadurch gekennzeichnet, dass**
der Farbdaten-Konversionsschritt den Schritt umfasst:
Justieren eines fotochromatischen Filters in Übereinstimmung mit der Verschiebungsrate und dem Dehnungsverhältnis, die in dem Unterscheidungsprozess gefunden wurden, und Belichten von fotographischem Druckpapier.

4. Fotographie-Bildverarbeitungsverfahren nach einem der Ansprüche 1 bis 3,
**dadurch gekennzeichnet, dass**
das Konzentrationshistogramm basierend auf den gesamten Bilddaten in Abhängigkeit vom Filmbilderwert einer Rolle generiert wird.

5. Fotographie-Bildverarbeitungsgerät, umfassend:
eine Filmbildeinzugseinheit (1) zum Erlangen eines Filmbildes durch Lesen eines Filmbildes durch ein Bildaufnahmegerät und Generieren von Farbbilddaten; **dadurch gekennzeichnet**, das es weiterhin umfasst:
eine Konzentrationshistogramm-Generierungseinheit (211) zum Generieren von Konzentrationshistogrammen für jede der RGB-Farbkomponenten aus den Farbbilddaten;
eine Verschiebungsverarbeitungseinheit (212) zum jeweiligen Verschieben von jedem der Konzentrationshistogramme anderer Farben in der Konzentrationsachsenrichtung zu einem Konzentrationshistogramm von einem der generierten Konzentrationshistogramme, das als eine Referenz verwendet wird;
eine Dehnungsverarbeitungseinheit (213) zum Dehnen der Konzentrationshistogramme von den anderen Farben in der Konzentrationsachsenrichtung mit dem minimalen Konzentrationswert, der nach der Verschiebungsverarbeitung als eine Referenz verwendet wird;
eine Überlagerungsbereich-Berechnungseinheit (214) zum Berechnen bzw. Ableiten eines Überlagerungsbereiches durch jede Kombination von zwei der RGB-Farbkomponenten nach der Dehnungsverarbeitung;
eine Unterscheidungseinheit (215) zum Auffinden einer Verschiebungsrate und eines Dehnungsverhältnisses, die entweder die Gesamtzahl jeweiliger Überlagerungsbereiche oder die jeweiligen Überlagerungsbereiche maximiert; und
eine Farbdaten-Konversionsverarbeitungseinheit zur Konversionsverarbeitung von Farbkomponenten von jedem Pixel der Farbbilddaten in Übereinstimmung mit der Verschiebungsrate und dem Dehnungsverhältnis, die von der Unterscheidungseinheit gefunden wurden.

6. Fotographie-Bildverarbeitungsgerät nach Anspruch 5, **dadurch gekennzeichnet, dass**
die Farbdaten-Konversionseinheit die Konzentration an der Position der Original-Konzentrationshistogramme für jede der RGB-Farbkomponenten entsprechend der Position berechnet, die den minimalen Wert der minimalen Konzentrationswerte für jedes Konzentrationshistogramm in der Verschiebungsrate und dem Dehnungsverhältnis kennzeichnet, die von der Unterscheidungseinheit als der Basiskonzentrationswert für jede Farbzusammensetzung des Filmes gefunden wurde, und Farbkomponenten von jedem Pixel der Farbbilddaten basierend auf dem erhaltenen Basiskonzentrationswert und dem Dehnungsverhältnis konvertiert.

7. Fotographie-Bildverarbeitungsgerät nach Anspruch 5, **dadurch gekennzeichnet, dass**
die Farbdaten-Konversionseinheit eine Belichtungseinheit zum Justieren eines fotochromatischen Filters in Übereinstimmung mit der Verschiebungsrate und dem Dehnungsverhältnis, die in dem Unterscheidungsprozess gefunden wurden, und zum Belichten von fotographischem Druckpapier umfasst.

8. Fotographie-Bildverarbeitungsgerät nach einem der Ansprüche 5 bis 7,
**dadurch gekennzeichnet, dass**
das Konzentrationshistogramm basierend auf den gesamten Bilddaten in Abhängigkeit vom Filmbilderwert einer Rolle generiert wird.

## Revendications

1. Procédé de traitement d'images photographiques, comprenant :
une étape d'entrée d'image de film pour acquérir une image de film en lisant une image de film au moyen d'un dispositif de capture d'image et générer des données d'image couleur ; **caractérisé en ce qu'**il comprend en outre :
une étape de génération d'histogrammes de concentration pour générer des histogrammes de concentration pour chacune des composantes couleur RVB des données d'image couleur ;
une étape de traitement de décalage pour décaler chacun des histogrammes de concentration d'autres couleurs dans la direction axiale de concentration, respectivement, vers un histogramme de concentration d'un des histogrammes de concentration générés utilisés en référence ;
une étape de traitement d'étirement pour étirer les histogrammes de concentration des autres couleurs dans la direction axiale de concentration avec la valeur de concentration minimale utilisée en référence après le traitement de décalage ;
une étape de calcul de zone superposée pour calculer et dériver la zone superposée de l'histogramme de concentration, respectivement, par toute combinaison de deux des composantes couleur RVB après le traitement d'étirement ;
une étape de discrimination pour trouver un taux de décalage et un rapport d'étirement qui maximisent le total des zones superposées respectives ou bien les zones superposées respectives ; et
une étape de conversion de données couleur pour effectuer le traitement de conversion des composantes couleur de chaque pixel des données d'image couleur selon le taux de décalage et le rapport d'étirement trouvés dans l'étape de discrimination.

2. Procédé de traitement d'images photographiques selon la revendication 1, **caractérisé en ce que :**
la conversion des données couleur comprend les étapes consistant à :
calculer la concentration à la position des histogrammes de concentration originaux pour chacune des composantes couleur RVB correspondant à la position qui indique la valeur minimum dans la valeur de concentration minimum de chaque histogramme de concentration dans le taux de décalage et le rapport d'étirement trouvés dans l'étape de discrimination en tant que valeur de concentration de base de chaque composition couleur du film, et
convertir les composantes couleur de chaque pixel des données d'image couleur sur la base de la valeur de concentration de base obtenue et du rapport d'étirement.

3. Procédé de traitement d'images photographiques selon la revendication 1, **caractérisé en ce que**
l'étape de conversion de données couleur comprend l'étape consistant à :
ajuster un filtre photochrome selon le taux de décalage et le rapport d'étirement trouvés dans le procédé de dicrimination et l'exposer au papier d'impression photographique.

4. Procédé de traitement d'images photographiques selon l'une quelconque des revendications 1 à 8, **caractérisé en ce que**
l'histogramme de concentration est généré sur la base des données d'image totale par rapport à la richesse des images de film d'un seul rouleau.

5. Dispositif de traitement d'images photographiques, comprenant :
une unité d'entrée d'image de film pour acquérir une image de film en lisant une image de film au moyen d'un dispositif de capture d'image et générer des données d'image couleur ; **caractérisé en ce qu'**il comprend en outre :
une unité de génération d'histogrammes de concentration (211) pour générer des histogrammes de concentration pour chacune des composantes couleur RVB des données d'image couleur ;
une unité de traitement de décalage (212) pour décaler chacun des histogrammes de concentration des autres couleurs dans la direction axiale de concentration, respectivement, vers un histogramme de concentration d'un des histogrammes de concentration générés utilisés en référence ;
une unité de traitement d'étirement (213) pour étirer les histogrammes de concentration des autres couleurs dans la direction axiale de concentration avec la valeur de concentration minimum utilisée en référence après le traitement de décalage ;
une unité de calcul de zone superposée (214) pour calculer et dériver la zone superposée, respectivement par toute combinaison de deux des composantes couleur RVB après traitement d'étirement ;
une unité de discrimination (215) pour trouver un taux de décalage et un rapport d'étirement qui maximisent le total des zones superposées respectives ou bien les zones superposées respectives ; et
une unité de traitement de conversion de données couleur pour traiter en conversion les composantes couleur de chaque pixel des données d'image couleur selon le taux de décalage et le rapport d'étirement trouvés dans l'unité de discrimination.

6. Dispositif de traitement d'images photographiques selon la revendication 5, **caractérisé en ce que**
l'unité de conversion de données couleur calcule la concentration à la position des histogrammes de concentration d'origine pour chacune des composantes couleur RVB correspondant à la position qui indique la valeur minimum dans la valeur de concentration minimum de chaque histogramme de concentration dans le taux de décalage et le rapport d'étirement trouvés dans l'unité de discrimination en tant que valeur de concentration de base de chaque composition couleur du film, et convertit les composantes couleur de chaque pixel des données d'image couleur sur la base de la valeur de concentration de base obtenue et du rapport d'étirement.

7. Dispositif de traitement d'images photographiques selon la revendication 5, **caractérisé en ce que**
l'unité de conversion couleur comprend une unité d'exposition pour ajuster un filtre photochrome selon le taux de décalage et le rapport d'étirement trouvés dans le procédé de discrimination et l'exposer au papier d'impression photographique.

8. Dispositif de traitement d'images photographiques selon l'une quelconque des revendications 5 à 7, **caractérisé en ce que**
l'histogramme de concentration est généré sur la base des données d'image totale par rapport à la richesse des images de film d'un seul rouleau.
